# FASCICULE DE BREVET EUROPEEN

(11) **EP 0 776 783 B1**
(45) Date de publication et mention de la délivrance du brevet: **21.04.1999**
(21) Numéro de dépôt: 96402443.4
(22) Date de dépôt: 14.11.1996
(51) Int. Cl.: B60N 2/22

(54) **Siège pour véhicule automobile muni d'une commande d'articulation de dossier**
Kraftfahrzeugsitz mit Rücklehnengelenksteuerung
Seat for motor vehicles with backrest articulation control

(30) Priorité: 29.11.1995 FR 9514112
(43) Date de publication de la demande: 04.06.1997
(73) Titulaire: CESA Compagnie Européenne de Sièges pour Automobiles, 92300 Levallois-Perret (FR)
(72) Inventeur: Harry, Sylvain, 45290 Nogent sur Vernisson (FR); Perier, Bernard, 45290 Nogent sur Vernisson (FR)
(74) Mandataire: Moncheny, Michel

(56) Documents cités:
- EP-A- 0 505 593
- US-A- 4 146 267
- US-A- 4 913 494
- US-A- 5 154 476

## Description

La présente invention concerne un siège pour véhicule automobile muni d'une commande d'articulation de dossier perfectionnée.

On connaît déjà dans l'état de la technique un siège pour véhicule automobile du type comprenant un dossier monté basculant sur une autre partie du siège au moyen d'une articulation verrouillable, d'axe transversal, et des moyens de commande de déverrouillage de cette articulation.

FR-A-2 687 621 (FR-92 02 172) décrit un siège de ce type destiné à être monté par exemple dans un véhicule monocorps.

Ce siège peut être placé dans différentes configuration d'utilisation de manière à former un siège courant, adapté notamment à la conduite, un siège de détente, une couchette ou une tablette. Eventuellement, le siège peut être retiré de l'habitacle.

Les différentes configurations du siège sont sélectionnées en déverrouillant notamment l'articulation du dossier et en faisant basculer ce dossier autour de l'axe transversal de l'articulation.

De façon classique, le déverrouillage de l'articulation du dossier est commandé par un organe porté par une partie latérale du siège.

Or, l'utilisateur souhaitant modifier la configuration du siège n'atteint pas toujours facilement la partie de ce siège où est agencé l'organe de commande, notamment lorsque cet utilisateur accède à l'habitacle par la partie arrière de celui-ci.

US-A-4 913 494 décrit un siège pour véhicule automobile du type comprenant un dossier monté basculant sur une autre partie du siège au moyen d'une articulation verrouillable, d'axe transversal, et des moyens de commande de déverrouillage de cette articulation comprenant deux leviers de commande articulés séparément sur deux parties distinctes du siège entre une position de repos, vers laquelle ils sont rappelés élastiquement, et une position de déverrouillage de cette articulation, les positions des deux leviers de commande étant indépendantes entre elles.

L'invention a pour but d'optimiser l'accès aux moyens de commande de déverrouillage de l'articulation du dossier.

A cet effet, l'invention a pour objet un siège pour véhicule automobile du type décrit dans US-A-4 913 494, caractérisé en ce que les moyens de commande de déverrouillage comprennent de plus une broche de commande déplaçable en rotation entre une position de verrouillage de l'articulation, vers laquelle elle est sollicitée élastiquement, et une position de déverrouillage de cette articulation, en ce que les leviers de commande actionnent des moyens de manoeuvre de la broche de commande s'opposant à la force élastique de rappel de cette broche, et en ce que les moyens de manoeuvre comprennent une bascule solidaire en rotation de la broche de commande et deux leviers de manoeuvre actionnés respectivement par les deux leviers de commande et destinés à coopérer respectivement avec deux bras opposés de la bascule, de manière à déplacer celle-ci dans un même sens de rotation, vers la position de déverrouillage de la broche.

Suivant d'autres caractéristiques de l'invention:
- un des leviers de manoeuvre et le levier de commande qui l'actionne forment un seul et même levier muni d'un bras de commande et d'un bras de manoeuvre ;
- un des leviers de manoeuvre est relié au levier de commande qui l'actionne par l'intermédiaire d'un câble de type Bowden ;
- un des leviers de commande est articulé sur une partie arrière du dossier ;
- un des leviers de commande est articulé sur une partie latérale de l'assise ;
- le siège comprend des moyens de sécurité s'opposant, en cas de choc longitudinal subi par le siège, au déplacement accidentel de la broche vers sa position de déverrouillage sous l'effet du déplacement, par inertie, de l'un quelconque des leviers de commande vers sa position de déverrouillage ;
- ces moyens de sécurité comprennent une masselotte articulée autour d'un axe sensiblement parallèle à celui de la broche de commande, déplaçable, par inertie lors d'un choc longitudinal subi par ce siège, entre une position écartée d'un organe solidaire en rotation de la broche de commande, vers laquelle cette masselotte est sollicitée élastiquement, et une position en contact avec cet organe, dans laquelle cette masselotte s'oppose à la rotation de la broche de commande dans le sens de déverrouillage de l'articulation, par coopération de butées complémentaires.

L'invention sera mieux comprise à la lecture de la description qui va suivre donnée uniquement à titre d'exemple et faite en se référant aux dessins annexés dans lesquels :
- la figure 1 est une vue en perspective d'un siège pour véhicule automobile selon l'invention ;
- la figure 2 est une vue en perspective éclatée de l'articulation du dossier du siège représenté à la figure 1;
- les figures 3 et 4 sont des vues suivant les flèches 3 et 4 respectivement de la figure 2, dans lesquelles l'articulation est verrouillée ;
- les figures 5 et 6 sont des vues similaires aux figures 3 et 4, dans lesquelles l'articulation est déverrouillée sous l'effet de l'actionnement du levier de commande articulé sur une partie arrière du dossier ;
- la figure 7 est une vue similaire à la figure 3 dans laquelle l'articulation est déverrouillée sous l'effet de l'actionnement du levier de commande articulé sur une partie latérale de l'assise.

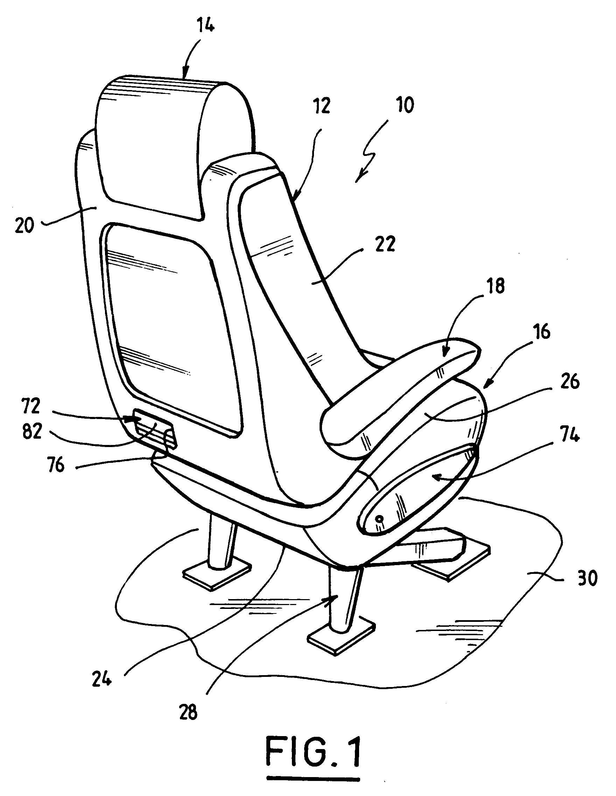

On a représenté sur la figure 1 un siège pour véhicule automobile selon l'invention, désigné par la référence générale 10.

De façon classique, le siège 10 comprend un dossier 12 surmonté d'un appui-tête 14, une assise 16 et une paire d'accoudoirs 18 dont un seul est représenté sur la figure 1.

La partie arrière du dossier est délimitée par une coque rigide 20. La partie avant de ce dossier est délimitée par une matelassure 22.

La partie inférieure de l'assise, ainsi que, partiellement, les parties latérales de cette assise, sont délimitées par une coque rigide 24.

La partie supérieure de l'assise est délimitée par une matelassure 26.

Le siège 10 comporte également un piètement 28 fixé de façon connue en soi, notamment de façon amovible, sur un plancher 30 du véhicule.

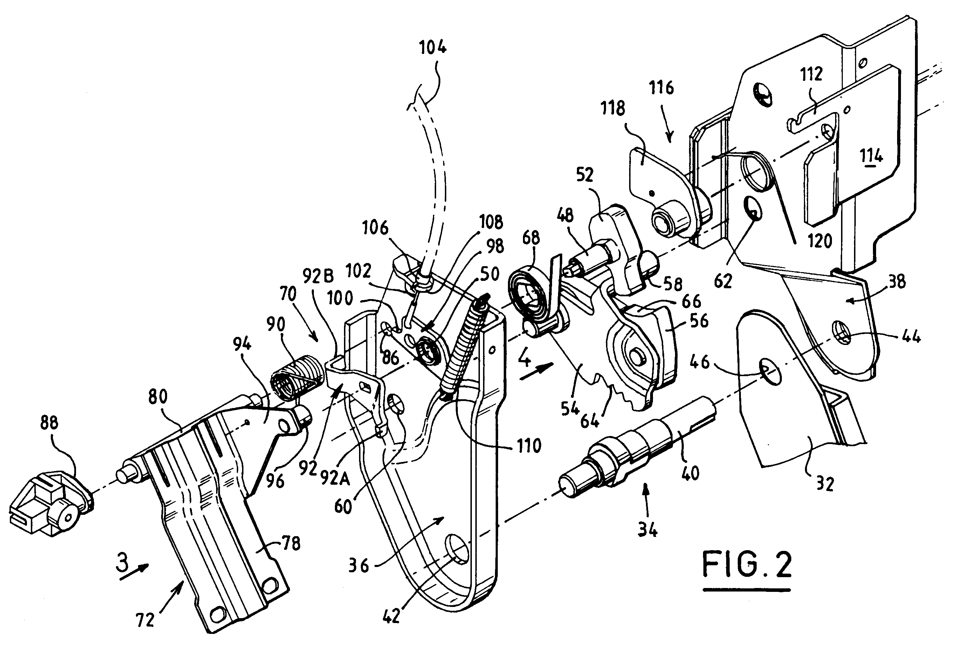

Le dossier 12 est monté basculant sur une armature fixe 32 du siège, représentée partiellement sur la figure 2, au moyen d'une articulation verrouillable classique 34 d'axe transversal, également partiellement représentée sur cette figure 2. L'articulation 34 est du type décrit dans FR-A-2 687 621. Elle est disposée entre deux ferrures 36,38, formant flasques, qui portent l'articulation et qui sont solidaires d'une armature du dossier non représentée sur les figures.

Les flasques 36,38 sont espacés transversalement entre eux à l'aide de moyens d'entretoisement classiques non représentés.

On reconnait sur la figure 2 un pivot 40 d'articulation du dossier monté rotatif dans des orifices 42 à 46, formant paliers, ménagés dans les flasques 36,38 et l'armature 32.

On reconnaît également sur cette figure 2 une broche 48 de commande de déverrouillage de l'articulation 34, d'axe parallèle à celui du pivot 40, montée rotative dans un orifice 50, formant palier, ménagée dans le flasque 36.

Une extrémité de la broche de commande 48 porte une came 52.

On reconnait encore sur la figure 2 deux organes 54,56 de l'articulation 34, solidaires d'une broche 58 montée rotative dans deux orifices 60,62, formant paliers, ménagés respectivement dans les deux flasques 36,38.

L'organe 54 délimite une denture 64. L'organe 56 délimite une contre-came 66 associée à la came 52.

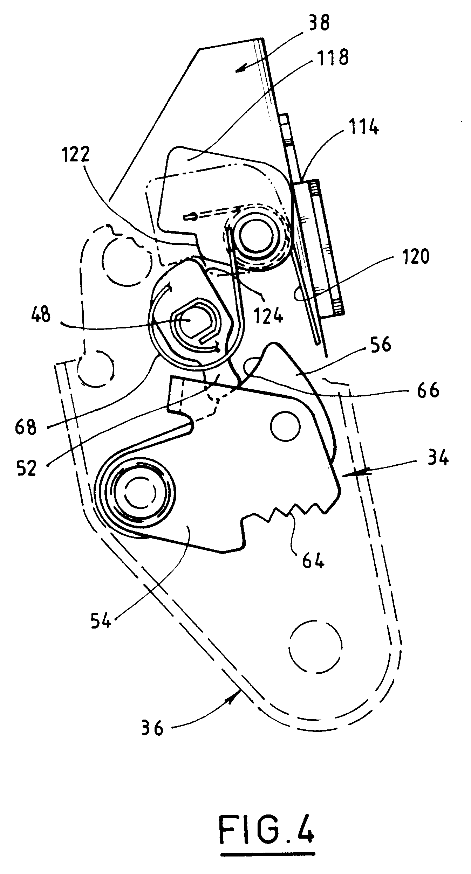

La broche 48 de commande de déverrouillage est sollicitée élastiquement par un ressort de rappel 68, à effet angulaire, vers une position de verrouillage de l'articulation 34 telle que représentée sur la figure 4. Dans cette position, la came 52 et la contre-came 66 sont en contact entre elles.

On notera que l'articulation 34 n'a été illustrée et décrite que partiellement. L'ensemble des éléments constituant ce type d'articulation ainsi que le fonctionnement précis de ce type d'articulation sont décrits dans FR-A-2 687 621.

Le siège 10 comprend également des moyens 70 de commande de déverrouillage de l'articulation 34 qui seront décrits ci-dessous.

Les moyens 70 comprennent deux leviers de commande 72,74 articulés séparément sur deux parties distinctes du siège.

Un premier levier de commande 72 est articulé, autour d'un axe transversal au siège, sur une partie arrière du dossier 12, de manière à être accessible depuis une ouverture 76 ménagée dans la coque 20. Le second levier de commande 74 est articulé, autour d'un axe transversal au siège, sur une partie latérale de l'assise 16, de manière à s'étendre sensiblement longitudinalement le long d'un bord latéral de la coque 24 (voir figure 1).

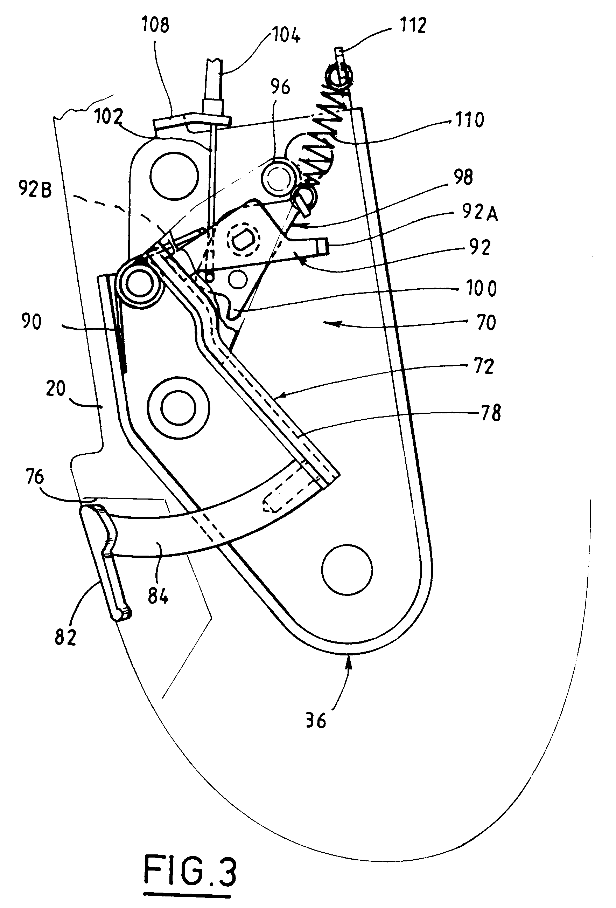

Le premier levier de commande 72 est montré plus en détail notamment sur les figures 2 et 3.

Sur ces figures, on voit que ce premier levier de commande 72 comporte un bras 78, en forme générale de plaque, dont une extrémité est solidaire d'une broche 80 d'articulation du levier 72 et dont l'autre extrémité est reliée à une poignée de commande 82 par l'intermédiaire d'un organe de liaison courbe 84.

Pour des raisons de clarté, la poignée 82 et l'organe de liaison 84 ne sont pas représentés sur la figure 2.

Le broche d'articulation 80 est montée rotative dans des orifices 86, dont un seul est représenté sur la figure 2, ménagés respectivement dans le flasque 36 et une ferrure 88 solidaire de l'armature du dossier.

Les leviers de commande 72,74 sont déplaçables entre une position de repos, vers laquelle ils sont rappelés élastiquement, et une position de déverrouillage de l'articulation 34, les positions de ces deux leviers de commande étant indépendantes entre elles.

On notera que le premier levier de commande 72 est rappelé élastiquement vers sa position de repos par un ressort 90 à effet angulaire.

Les leviers de commande 72,74 sont destinés à actionner des moyens de manoeuvre de la broche de commande 48, illustrés notamment sur les figures 2 et 3.

Ces moyens de manoeuvre sont destinés à s'opposer à la force élastique de rappel de la broche de commande 48 et comprennent une bascule 92 solidaire en rotation de cette broche 48.

La bascule 92 est portée par l'extrémité de la broche 48 qui est opposée à la came 52 et qui s'étend à travers l'orifice 50 du flasque 36.

Les moyens de manoeuvre comprennent également deux leviers de manoeuvre actionnés respectivement par les deux leviers de commande 72,74 et destinés à coopérer respectivement avec deux bras 92A,92B opposés de la bascule de manière à déplacer cette dernière dans le même sens de rotation, vers la position de déverrouillage de la broche de commande 48.

Un premier levier de manoeuvre et le levier de commande 72 qui l'actionne forment un seul et même levier muni du bras de commande 78 et d'un bras de manoeuvre 94, en forme générale de plaque, sensiblement perpendiculaire au bras de commande 78.

L'extrémité libre du bras de manoeuvre 94 est munie d'un doigt 96 destiné à coopérer avec l'extrémité d'un premier bras 92A de la bascule.

Le second levier de manoeuvre 98 est monté articulé sur le flasque 36, coaxialement à la broche de commande 48, de manière à pouvoir pivoter autour de cette broche.

Une première extrémité du second levier de manoeuvre 98 est prolongée par un doigt 100 destiné à coopérer avec l'extrémité recourbée du bras 92B de la bascule.

Cette même extrémité du levier de manoeuvre 98 est reliée au second levier de commande 74 par l'intermédiaire d'un câble classique 102 de type Bowden.

Ce câble 102 est monté coulissant dans une gaine 104 dont on a représenté une extrémité immobilisée par une bague d'arrêt 106 en appui contre un siège passant 108 solidaire du flasque 36.

Le second levier de manoeuvre 98 est rappelé élastiquement en position de repos, correspondant à la position de repos du second levier de commande 74 qui l'actionne, par un ressort de traction 110 reliant la seconde extrémité de ce levier de manoeuvre 98 à un crochet 112 découpé dans une ferrure 114 solidaire du flasque 38.

Lorsque les leviers de manoeuvre 72,98 sont en position de repos, les doigts 96,100 sont disposés en aval des bras correspondants 92A,92B de la bascule, par rapport au sens de déverrouillage de l'articulation 34, en étant espacés de ces bras.

On a représenté notamment sur les figures 2 et 4 des moyens 116 de sécurité s'opposant, en cas de choc longitudinal subi par le siège, au déplacement accidentel de la broche de commande 48 vers sa position de déverrouillage.

Un tel déplacement accidentel pourrait avoir lieu, lors du choc, sous l'effet du déplacement par inertie de l'un quelconque des leviers de commande vers sa position de déverrouillage.

Ces moyens de sécurité 116 comprennent une plaquette 118, formant masselotte, articulée autour d'un axe sensiblement parallèle à celui de la broche 48, déplaçable, par inertie lors d'un choc longitudinal subi par le siège, entre une position écartée de la came 52, telle que représentée en trait fort sur la figure 4, et une position en contact avec cette came 52, telle que représentée en trait mixte sur la figure 4.

La masselotte 118 est sollicitée en position écartée de la came 52 par un ressort de rappel 120 à effet angulaire. Dans cette position, la masselotte 118 est en butée contre une portion de la ferrure 114.

Lorsque la masselotte 118 est en position de contact avec la came 52, elle s'oppose à la rotation de cette came dans le sens de déverrouillage de l'articulation par coopération de butées complémentaires 122,124 ménagées sur la tranche de la masselotte et sur la came.

Le fonctionnement des moyens 70 de commande de déverrouillage est le suivant.

Initialement, les leviers de commande 72,74 et les moyens de manoeuvre qu'ils actionnent sont en position de repos, comme cela est représenté sur les figures 1 et 3.

Les positions de repos des leviers de commande 72,74 sont déterminées par des butées non représentées, agencées de façon classique dans le siège.

On notera que, dans ce cas, la poignée 82 affleure le contour externe de l'ouverture 76.

L'articulation 34 est verrouillée, comme cela est représenté sur la figure 4.

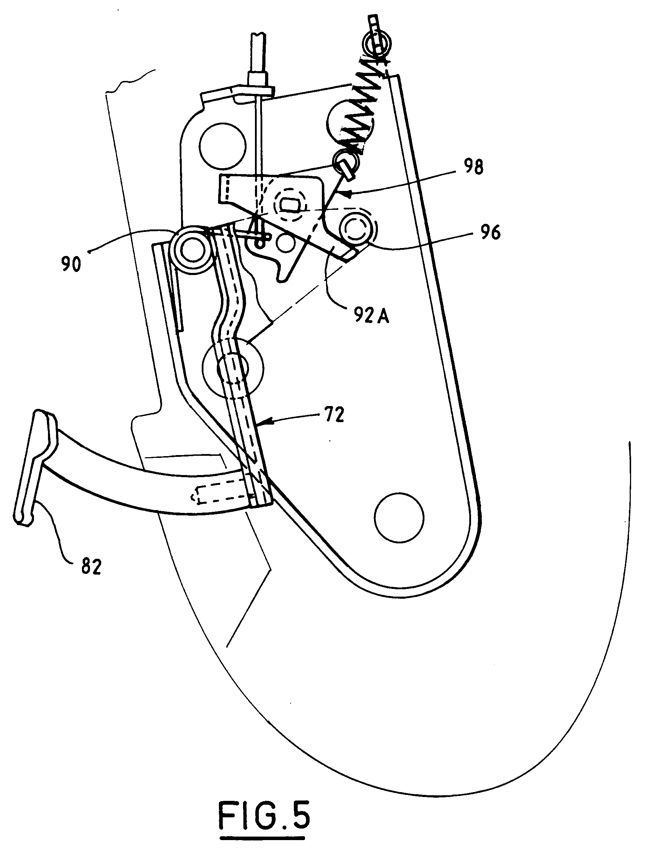

Pour déverrouiller cette articulation au moyen du premier levier de commande 72, on actionne la poignée 82 en la tirant à l'écart de la coque 20, comme cela est représenté sur la figure 5.

Le doigt 96 vient alors au contact du premier bras 92A de la bascule et sollicite cette dernière dans le sens horaire (en se référant à la figure 5) correspondant au sens de déverrouillage de l'articulation. Le second levier de manoeuvre 98 reste immobile.

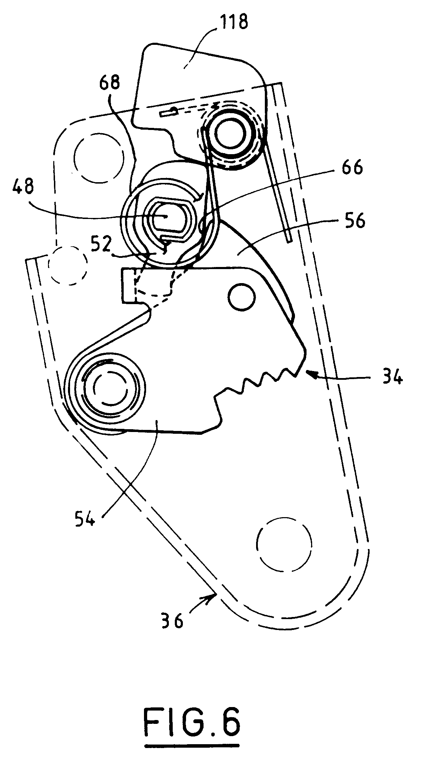

La came 52 tourne solidairement avec la bascule 92 de manière à s'écarter de la contre-came 66, comme cela est représenté sur la figure 6, et à déverrouiller l'articulation 34, conformément au fonctionnement de cette articulation qui est décrit dans FR-A-2 687 621.

Lorsque l'on relâche la poignée 82, le levier de commande 72 est rappelé élastiquement vers sa position de repos par le ressort 90. Simultanément, la came 52 est rappelée élastiquement vers sa position de verrouillage d'articulation 34 par le ressort 68.

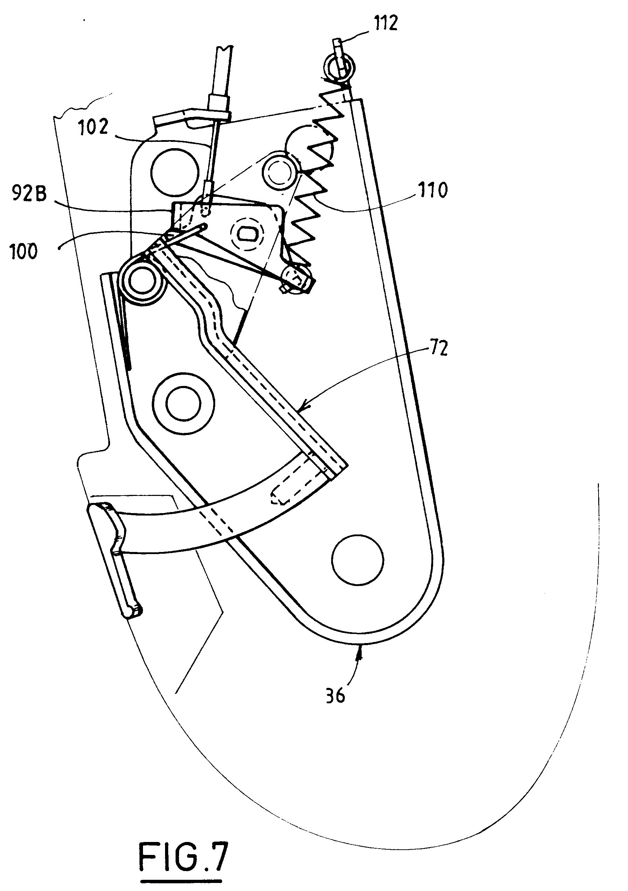

Pour déverrouiller l'articulation 34 au moyen du second levier de commande 74, on soulève celui-ci, ce qui a pour effet d'entraîner, par l'intermédiaire du câble 102, le second levier de manoeuvre 98 dans un sens horaire de déverrouillage de l'articulation, comme cela est représenté sur la figure 7.

Le doigt 100 vient alors au contact du second bras 92B de la bascule et provoque sur cette dernière et sur la broche de déverrouillage 48 les mêmes effets que ceux décrits précédemment lors de l'actionnement du premier levier de commande 72.

On notera que lorsque le second levier de commande 74 est actionné, le premier levier de commande 72 reste immobile.

Une fois le second levier de commande 74 relâché, le second levier de manoeuvre 98 est rappelé vers sa position de repos par le ressort 110.

Un ressort de rappel supplémentaire, non représenté sur les figures, relié directement au second levier de commande 74, sollicite ce dernier en position de repos.

L'invention comporte de nombreux avantages.

En particulier, les deux leviers de commande articulés, l'un sur une partie arrière du dossier, et l'autre sur une partie latéralement de l'assise, sont faciles d'accès et permettent à un utilisateur de commander le déverrouillage de l'articulation du dossier quelle que soit la position de cet utilisateur par rapport au siège.

Par ailleurs, les déplacements des leviers de commande sont indépendants.

De plus, les positions de repos de ces leviers sont indépendantes de la position des différents éléments de l'articulation, notamment de la broche de commande de cette articulation, ce qui permet d'affranchir les positions de repos des tolérances de fabrication et de l'usure de ces éléments.

## Revendications

1. Siège pour véhicule automobile du type comprenant un dossier (12) monté basculant sur une autre partie (32) du siège au moyen d'une articulation (34) verrouillable, d'axe transversal, et des moyens (70) de commande de déverrouillage de cette articulation comprenant deux leviers de commande (72,74) articulés séparément sur deux parties distinctes (12,16) du siège entre une position de repos, vers laquelle ils sont rappelés élastiquement, et une position de déverrouillage de cette articulation (34), les positions des deux leviers de commande (72,74) étant indépendantes entre elles, caractérisé en ce que les moyens (70) de commande de déverrouillage comprennent de plus une broche de commande (48) déplaçable en rotation entre une position de verrouillage de l'articulation (34), vers laquelle elle est sollicitée élastiquement, et une position de déverrouillage de cette articulation, en ce que les leviers de commande (72,74) actionnent des moyens (92,94,98) de manoeuvre de la broche de commande (48) s'opposant à la force élastique de rappel de cette broche, et en ce que les moyens de manoeuvre comprennent une bascule (92) solidaire en rotation de la broche de commande (48) et deux leviers de manoeuvre (72,98) actionnés respectivement par les deux leviers de commande et destinés à coopérer respectivement avec deux bras opposés (92A,92B) de la bascule, de manière à déplacer celle-ci dans un même sens de rotation, vers la position de déverrouillage de la broche (48).

2. Siège selon la revendication 1, caractérisé en ce qu'un des leviers de manoeuvre et le levier de commande qui l'actionne forment un seul et même levier (72) muni d'un bras (78) de commande et d'un bras (94) de manoeuvre.

3. Siège selon la revendication 1 ou 2, caractérisé en ce qu'un des leviers de manoeuvre (98) est relié au levier de commande (74) qui l'actionne par l'intermédiaire d'un câble (102) de type Bowden.

4. Siège selon l'une quelconque des revendications précédentes, caractérisé en ce qu'un des leviers de commande (72) est articulé sur une partie arrière du dossier (12).

5. Siège selon l'une quelconque des revendications précédentes, caractérisé en ce qu'un des leviers de commande (74) est articulé sur une partie latérale de l'assise (16).

6. Siège selon l'une quelconque des revendications précédentes, caractérisé en ce qu'il comprend des moyens de sécurité (116) s'opposant, en cas de choc longitudinal subi par le siège, au déplacement accidentel de la broche (48) vers sa position de déverrouillage sous l'effet du déplacement, par inertie, de l'un quelconque des leviers de commande (72,74) vers sa position de déverrouillage.

7. Siège selon la revendication 6, caractérisé en ce que ces moyens de sécurité (116) comprennent une masselotte (118) articulée autour d'un axe sensiblement parallèle à celui de la broche de commande (48), déplaçable, par inertie lors d'un choc longitudinal subi par ce siège, entre une position écartée d'un organe (52) solidaire en rotation de la broche de commande (48), vers laquelle cette masselotte (118) est sollicitée élastiquement, et une position en contact avec cet organe (52), dans laquelle cette masselotte (118) s'oppose à la rotation de la broche de commande (48) dans le sens de déverrouillage de l'articulation (34), par coopération de butées complémentaires (122,124).

## Claims

1. Seat for a motor vehicle, of the type comprising a backrest (12) pivotally mounted on another past (32) of the seat by means of a lockable hinge (34) of transverse axis, and release control means (70) for this hinge, comprising two control levers (72, 74) articulated separately on two distinct parts (12, 16) of the seat between a resting position, towards which they are resiliently biased, and a release position for this hinge (34), the positions of the two control levers (72, 74) being independent of one another, characterised in that the release control means (70) further comprise a control spindle (48) which is rotationally movable between a locking position of the hinge (34), towards which it is resiliently biased, and a release position for this hinge, in that the control levers (72, 74) actuate means (92, 94, 98) for manoeuvring the control spindle (48) counter to the resilient restoring force on this spindle, and in that the manoeuvring meals comprise a rocker (92) fixed for rotation with the control spindle (948) and two manoeuvring levers (72, 98) actuated respectively by the two control levers and intended to cooperate respectively with two opposing arms (92A, 92B) of the rocker, so as to move the latter in the same direction of rotation, towards the position of release of the spindle (48).

2. Seat according to claim 1, characterised in that one of the manoeuvring levers and the control lever which actuates it form one and the same lever (72) provided with a control arm (78) and a manoeuvring arm (94).

3. Seat according to claim 1 or 2, characterised in that one of the manoeuvring levers (98) is connected to the control lever (74) which actuates it via a Bowden cable (102).

4. Seat according to any one of the preceding claims, characterised in that one of the control levers (72) is articulated on a rear part of the backrest (12).

5. Seat according to any one of the preceding claims, characterised in that one of the control levels (74) is articulated on a side part of the seat cushion (16).

6. Seat according to any one of the preceding claims, characterised in that it comprises safety means (116) which, in the event of the seat being subjected to longitudinal impact, counteract the accidental movement of the spindle (48) towards its release position under the effect of the displacement, by inertia, of any of the control levers (72, 74) towards their release position.

7. Seat according to claim 6, characterised in that these safety means (116) comprise a flyweight (118) articulated about an axis which is substantially parallel to that of the control spindle (48), said flyweight being movable by inertia, in the event of this seat being subjected to longitudinal impact, between a position remote from a member (52) which is fixed for rotation with the control spindle (48), towards which this flyweight (118) is resiliently biased, and a position in contact with this member (52), in which this flyweight (118) counteracts the rotation of the control spindle (48) in the direction of release of the articulation (34), by the cooperation of complementary abutments (122, 124).

## Patentansprüche

1. Kraftfahrzeugsitz, umfassend eine Rückenlehne (12), die kippbar auf einem weiteren Teil (32) des Sitzes mit Hilfe eines verriegelbaren Gelenks (34) mit Querachse montiert ist, und Mitteln (70) zur Steuerung der Entriegelung dieses Gelenks, umfassend zwei Steuerhebel (72, 74), die getrennt auf zwei unterschiedlichen Teilen (12, 16) des Sitzes zwischen einer Ruheposition, in die sie elastisch rückgestellt werden, und einer Entriegelungsposition dieses Gelenks (34) gelenkig angeordnet sind, wobei die Positionen der beiden Steuerhebel (72, 74) voneinander unabhängig sind, dadurch gekennzeichnet, daß die Mittel (70) zur Steuerung der Entriegelung ferner eine Steuerspindel (48) umfassen, die zwischen einer Position der Verriegelung des Gelenks (34), in die sie elastisch rückgestellt wird, und einer Position der Entriegelung dieses Gelenks verdrehbar ist, daß die Steuerhebel (72, 74) Mittel (92, 94, 98) zur Betätigung der Steuerspindel (48) betätigen, die sich der elastischen Rückstellkraft dieser Spindel entgegensetzen, und daß die Betätigungsmittel eine Kippvorrichtung (92), die drehfest mit der Steuerspindel (48) verbunden ist, und zwei Betätigungshebel (72, 98) umfassen, die durch die beiden Steuerhebel betätigt werden und dazu bestimmt sind, mit zwei gegenüberliegenden Armen (92A, 92B) der Kippvorrichtung Zusammenzuwirken, um diese in eine selbe Drehrichtung, in die Richtung der Entriegelung der Spindel (48) zu verschieben.

2. Sitz nach Anspruch 1, dadurch gekennzeichnet, daß einer der Betätigungshebel und der Steuerhebel, der ihn betätigt, einen einzigen und selben Hebel (72) bilden, der mit einem Steuerarm (78) und einem Betätigungsarm (94) versehen ist.

3. Sitz nach Anspruch 1 oder 2, dadurch gekennzeichent, daß einer der Betätigungshebel (98) mit dem Steuerhebel (74), der ihn betätigt, mit Hilfe eines Bowden-Zugs (102) verbunden ist.

4. Sitz nach einem der vorhergehenden Ansprüche, dadurch gekennzeichnet, daß einer der Steuerhebel (72) an einem hinteren Teil der Rückenlehne (12) gelenkig montiert ist.

5. Sitz nach einem der vorhergehenden Ansprüche, dadurch gekennzeichnet, daß einer der Steuerhebel (74) an einem Seitenteil der Sitzfläche (16) gelenkig montiert ist.

6. Sitz nach einem der vorhergehenden Ansprüche, dadurch gekennzeichnet, daß er Sicherheitsmittel (116) umfaßt, die sich im Falle eines Längsstoßes, dem der Sitz unterliegt, der ungewollten Verschiebung der Spindel (48) in ihre Entriegelungsposition unter der Wirkung der Verschiebung eines der Steuerhebel (72, 74) durch Trägheit in seine Entriegelungsposition entgegensetzt.

7. Sitz nach Anspruch 6, dadurch gekennzeichnet, daß diese Sicherheitsmittel (116) ein Fliehgewicht (118), das gelenkig um eine im wesentlichen zu jener der Steuerspindel (48) parallele Achse montiert ist, das durch Trägheit bei einem Längsstoß, dem der Sitz unterliegt, zwischen einer von einem mit der Steuerspindel (48) drehfest verbundenen Glied (52) entfernten Position, in die dieses Fliehgewicht elastisch gebracht wird, und einer Position in Kontakt mit diesem Glied (52) bewegbar ist, in der sich dieses Fliehgewicht (118) der Drehung der Steuerspindel (48) in die Richtung der Entriegelung des Gelenks (34) durch Zusammenwirken von komplementären Anschlägen (122, 124) entgegensetzt.
